# EUROPEAN PATENT APPLICATION

(11) **EP 2 398 216 A1**
(43) Date of publication of application: **21.12.2011**
(21) Application number: 10740959.1
(22) Date of filing: 11.02.2010
(51) Int. Cl.: H04M 3/42, H04M 3/436

(54) **METHOD AND SYSTEM FOR SENDING MESSAGES OVER TELECOMMUNICATION NETWORKS**

(30) Priority: 11.02.2009 ES 200900388
(71) Applicant: Teleconline Networks, SL, 28760 Tres Cantos - Madrid (ES)
(72) Inventor: GONZÁLEZ ESCRIBANO, Miguel Angel, E-28760 Tres Cantos - Madrid (ES)
(74) Representative: ABG Patentes, S.L.
(86) International application number: PCT/ES2010/070074
(87) International publication number: WO 2010/092220

(57) **Abstract**

The object of the present invention is to provide an economic alternative to the current systems for sending messages, both text messages (SMS) and multimedia messages (MMS), between telecommunication network users. For this purpose, use is made of the advantages of call signaling protocols, specifically the duration of the ringing tone in an unanswered call (commonly called "missed call") for sending messages which are precoded and known by the system users. The method and system for sending messages between telephony terminals are designed such that they are used by the user in a very similar manner to the sending/receiving SMS and MMS messages, providing a simple and economic method (without associated direct cost) for sending messages between telephony users.

## Description

### Background of the Invention

### Technical Field of the Invention

The field of application of the present invention is in telecommunication systems, and more specifically in systems for sending messages between telephony users.

### Prior Art

As a result of the development of the mobile telephony networks, sending messages between users (first simple text or SMS messages and later multimedia or MMS messages) has become one of the most widely used services as a result of how easy it is to use, its immediacy and low cost, meaning that millions of people worldwide regularly use the service to communicate with one another.

Although it is a technology that is characteristic of GSM mobile telephony, it is currently possible to send said messages by means of other mobile networks, such as 3G, and even in fixed telephony networks if one has terminals prepared for this purpose.

These messages are especially useful for sending very specific information, as well as confirming the reception of said information. This means that the sent messages often have the same information, so-called "templates" being used for sending them, whereby preventing the repeated writing of their content.

In addition, a communication method based on telephony commonly called a "missed call", consisting of two users previously agreeing that said missed call will have a certain meaning, such as a for example "call me", "I'm here", or something similar, is used on determined occasions.

With the use of this "missed call", the user avoids paying for a conventional call or for sending a message, simply making use of the cost structure of telephony services which do not charge for calls that are not answered by the recipient or by automatic services, such as voice mail or automatic call forwarding.

### Description of the Invention

The present invention proposes a method for sending messages between telephone terminals according to claim 1, a computer program according to claim 13 and a system for sending messages between telephony terminals according to claim 14. The method, the computer program and the system of the invention allow sending messages between users at no cost, making use of the current rating structure of telephony services which do not charge a communication if the recipient does not answer the call. The dependent claims define preferred embodiments of the present invention.

In a first aspect, a method is defined for sending messages between telephone terminals, comprising the following steps:
coding a message in an emitting terminal as a specific duration time of an unanswered call,
making a call with that specific duration time, and
decoding the message corresponding to the duration of the received call in a receiving terminal; and wherein
the message to be sent is one selected from a plurality of available messages; and
the coding message - time of the call and decoding time of the call - message is performed by means of consulting a coding table relating each message of the plurality of available messages with a specific time of the call.

In a second aspect, a computer program is defined, **characterized in that** it comprises program code means for carrying out the method according to the first aspect of the invention.

In a third aspect, a system is defined for sending messages between telephony terminals, comprising in at least one telephony terminal:
memory means suitable for storing at least one coding table relating each message of a plurality of messages with a specific duration of an unanswered call, and
processing means suitable for carrying out the steps of the method according to the first aspect of the invention.

The operating principle of the method, program and system of the invention is based on the definition of a limited number of messages that will be sent by means of a "missed call" of a specific duration for each message. One and only one determined duration will correspond to each message, which will be reflected in a table with the message-duration relations. This table must be known by the two users (emitter and receiver) so that the system can code-decode the messages.

By way of simplified example and using the known call rings as a coding period (rings which are heard when waiting for a response in a conventional telephone communication), the table could be a relation between the number of rings emitted before cutting off communication and the following simple messages:
*1 ring; I'm here*
*2 rings; I'm late, please wait for me*
*3 rings; I'm busy, I'll call you later*
*4 rings; please call me now*

The proposed method, program and system will perform automatically and transparently for the user all the functions necessary so that the method, program and system are operative, easy to use and do not disable the other functions of the telephone terminal, such as voice calls, sending text and multimedia messages, etc.

### Definition of Terms

For the purpose of facilitating the reading and comprehension of this document, a brief glossary is presented below of the new terms mentioned herein:
FMS (Free Message Service): Reference name for the message service described in this specification.
STN (Sending Telephone Number): Telephone number of the subscriber sending the FMS message.
RTN (Receiving Telephone Number): Telephone number of the subscriber receiving the FMS message.
TCR (Time of Call Ring): Time during which the call ring sounds. It is the time that the ring for indicating a call sounds since the STN initiates the call until either RTN takes the call or the STN hangs up before the RTN answers. This time has a limit *TCRmax,* after which the telephony system itself automatically considers the call to be over as it considers that communication will not be set up, and it releases the terminals. It must be clarified that this TCR time has nothing to do with the duration of the telephone conversation.
BCT (Basic Message Coding Table): This is a data warehouse where the relations between the different messages and the times specific for their transmission are saved. The system defines a Basic Table valid for all the users, but the users can customize it or/and expand it with their own messages. This expanded table will be called MCT (Message Coding Table).

### Brief Description of the Drawings

To complement the description that is being made and for the purpose of aiding to better understand the features of the invention according to a preferred practical embodiment thereof, a set of drawings is attached as an integral part of said description in which the following has been depicted with an illustrative and non-limiting character:
Figure 1 shows a depiction of the division of the maximum time *TCRmax* into sub-periods Δ.
Figure 2 shows a simple depiction of the BCT, with the assignment of a single message to each period of time.
Figure 3 shows a depiction of the BCT in an embodiment with a double list of messages, in which the semantic differentiation between the message and the answer to the same is taken into account.
Figure 4 shows an example of a list of messages in a case of a single assignment.
Figure 5 shows an example of two lists of messages, for initiating and for answering, in a case of double assignment.
Figure 6 shows a depiction of the MCT defined by two users STNa and STNb.
Figure 7 schematically shows a process for sending FMS messages according to the invention.
Figure 8 schematically shows a process for receiving FMS messages according to the invention.
Figure 9 schematically shows an example of the exchange of messages in an embodiment of the method of the invention in which a prior message can be answered with a list of messages related with the same.

### Detailed Description of a Preferred Embodiment of the Invention

The working of the system is based on transmitting messages by means of missed calls of a predetermined duration for each message.

For this purpose, the *TCRmax,* which as has been discussed is the maximum time that the call ring sounds without the RTN picking up, is divided into a series of sub-periods, preferably of the same duration, each of which will be assigned a single message.

The greater the number of sub-periods (lower duration thereof), the greater the number of different messages can be sent by the system. Theoretically, *TCRmax* could be divided into as many sub-periods as there are telephone terminals capable of timing, but the telecommunication network itself has its own down times, lag times and connection periods which limit this division. The number of different messages to be sent will therefore be limited not only by *TCRmax* but by the network configuration, the terminal specifications, etc.

For the definition and development of the system it is sufficient to accept this limitation in the number of messages to be coded, such that the proposed FMS system does not replace traditional systems for sending messages (SMS and MMS) but it is presented as a complement thereto.

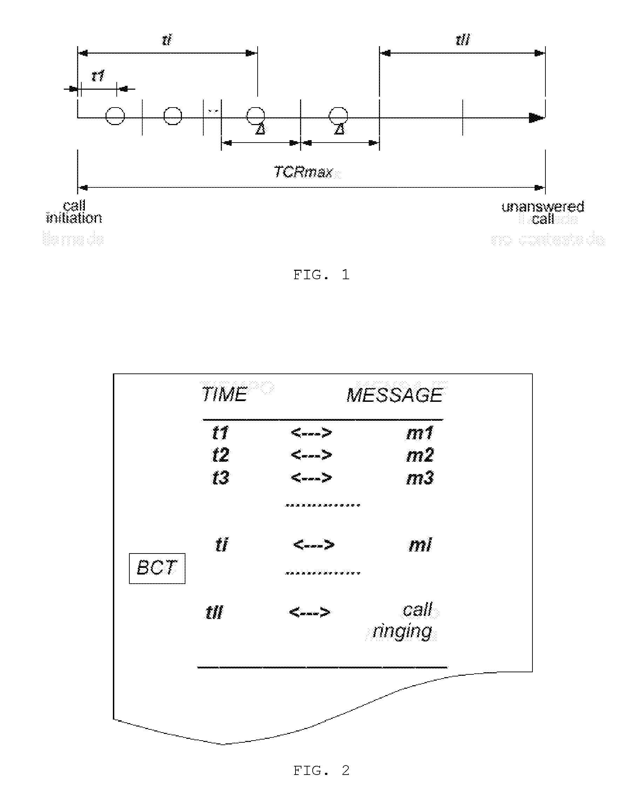

Figure 1 schematically shows a division of the maximum time *TCRmax* into sub-periods Δ. The times *t1, t2...ti...* represent the duration times of the calls to be generated, necessary for transmitting the associated messages. These times are centered in the sub-periods Δ such that the system is effective even with variations of ±Δ/2 in the time measurements.

The object of the last period depicted *t11* is to give the capacity to discriminate sending FMS messages from conventional calls. During said period, there will not be any associated messages such that conventional telephone calls can be identified and answered, as will be explained below. The system will only code up to a period *TCRmax - t11.*

Each time *t1, t2...ti...* is assigned a message *m1, m2... mi...* to generate the Basic Coding Table BCT. This table will allow the conversion between messages and times of call both for sending and for receiving.

If needed, the times for sending messages between equipment and telecommunication networks can be calibrated by means of an adjustment system which allows assuring minimum compatibility between different terminal models and telephone communication service providers.

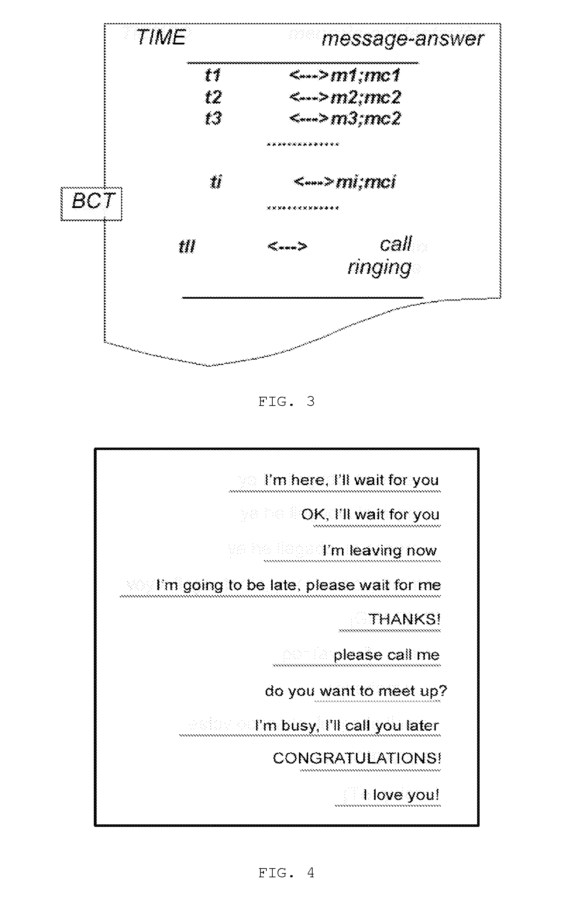

Figure 2 shows a simple depiction of the BCT, with the assignment of a single message *mi* to each period of time *ti.* An example of a list of messages in the case of single assignment can be seen in Figure 4. This single assignment time *ti* -message *mi* can be expanded if the semantic differentiation between the message and the answer to the same, characteristic of a conversation, is taken into account. A double list of messages can be considered, one for initiating the conversation and the other one for responding to said messages can be set out. This possibility is reflected in Figure 3. This increases the number of coded messages and thereby the usefulness of the FMS system.

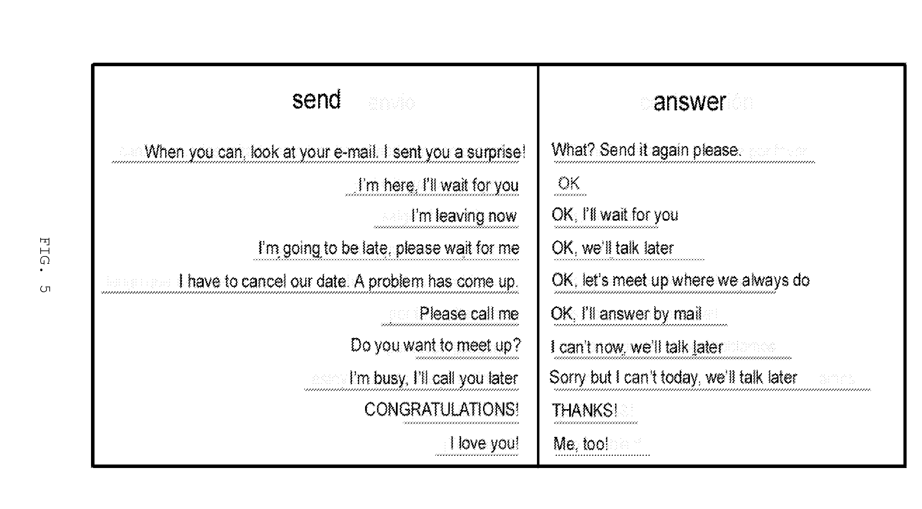

Figures 4 and 5 show examples of possible lists of messages in the case of a single list of messages (*m1, m2... mi...*) and of double list of messages (*m1, m2... mi...; mc1, mc2... mci...*), respectively. In the case of the single list, messages that would serve for initiating conversation, such as "do you want to meet up?" or "CONGRATULATIONS!", and messages which would serve for answering a received message, for example, "THANKS!" or "OK, I'll wait for you", would be included therein.

In the case depicted in Figure 5, however, there are two different lists of messages. The available messages (*m1, m2... mi*) for initiating a conversation are listed in the column on the left, while the available messages for sending a response to a received message (*mc1, mc2... mci...*) are shown in the list on the right. For example, in the event of the message for initiating "do you want to meet up?", suitable messages for answering that could be selected from the list of messages for answering could be "OK, I'll wait for you", "OK, we'll talk later", "OK, let's meet up where we always do", "OK, I'll answer by mail" or "sorry but I can't today, we'll talk later", while for a message for initiating "I'm leaving now", possible messages for answering from the list would be "OK, I'll wait for you", "OK, let's meet up where we always do" or "I can't now, we'll talk later".

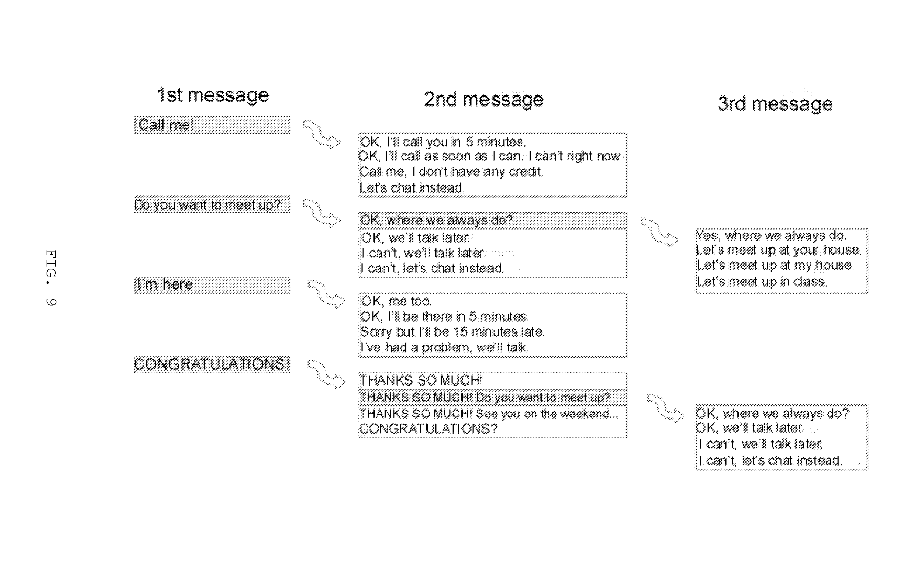

It is possible to even further optimize the response capacity of the FMS system by expanding the double message-answer specification to a multiple "conversation"-type specification. In this case, the messages to be sent will be a function of those received, i.e., depending on the received message, a determined list of messages to be sent will be activated, such that not only will there be a double message-answer table, but also a multiple one, depending on all the options of sent messages. Figure 9 includes an example of multiple specification of messages, with four lists of available messages, each of them as an answer to a received message. For example, in the event of receiving the message (1^{st} message) "Do you want to meet up?", the list (2^{nd} message) of possible messages for answering containing the messages "OK, where we always do?", "OK, we'll talk later", "I can't, we'll talk later" and "I can't, we'll chat later", would be activated. Selecting and sending the message "OK, where we always do?" would in turn activate a list (3^{rd} message) in the terminal which receives this message with the options "Yes, where we always do", "Let's meet up at your house", "Let's meet up in my house" and "Let's meet up in class". As many levels of lists for answering as needed can be defined.

The messages to be sent include those which the telephone can handle, such as SMS, MMS, or mail. This feature is compatible with the customization option by pairs of users.

Since the messages are of a multimedia nature, being able to include text, sound, images and video, they enable introducing therein advertising content or content about the sponsors of the service.

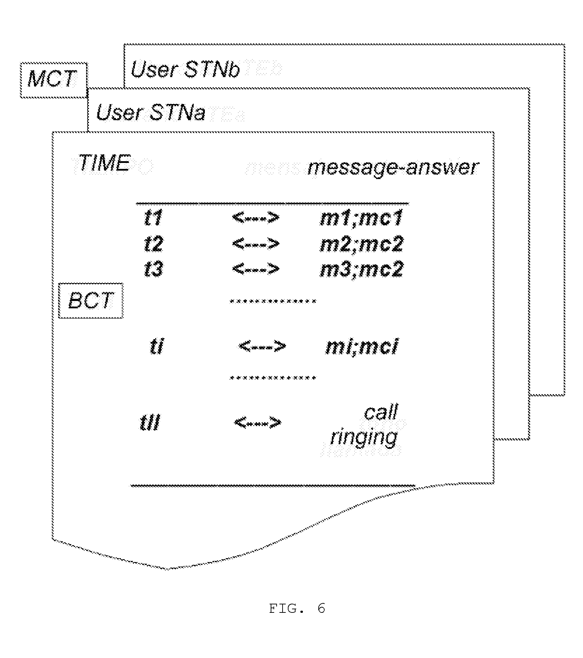

As previously discussed, each user can even further expand the number of messages to be sent by defining his own list of messages and disclosing it to other users. Therefore, when a user RTN receives an FMS message by means of a call of duration *ti,* the coding of the message will depend on the emitter STN, whose list of messages must be part of the Message Coding Table MCT of the receiver RTN, as reflected in Figure 6. Each user will therefore have his own MCT which will always include the BCT that will be common for all the users. The MCT could be expanded by adding individual files with the lists of messages characteristic of each contact. This method for expanding the MCT will allow a simpler and more agile management of the multiple instances of messages to be sent by means of the codes of time *t1, t2... ti...*

In one embodiment, any set of data common for the users and located in the terminal, such as data relating to the date, time or data relating to the user located in the terminal, such as telephone number, e-mail or photographs, can be used for elaborating the messages.

Since the system uses unanswered calls for transmitting the messages, it is necessary to provide a formula for discriminating conventional calls from FMS messages, such that the user only answers if it is a voice call and does not take the call when a user STN is trying to send an FMS message, because it would abort the reception thereof.

In the first place, in order to be able to receive FMS messages the users cannot have the automatic call forwarding or voice mail service activated.

For discriminating between calls and FMS messages, it is proposed that a group of specific users of the FMS system be created in the telephone's phonebook, where all those contacts that can receive FMS messages because the system is installed therein, are included. If a call is received from a telephone not associated with this group, the working of the telephone will be as normal when receiving a voice call.

If the user RTN receives a call from a contact belonging to the group of FMS users, the system will assign it a special ringing tone, **characterized in that** it will be initiated with a period of silence until a time *t11* has passed, when a ringing tone advising the user RTN that it is a voice call, not a message, will begin to sound. The user initiating the voice call STN will have to take into account that until the end of the period TCRmax, the RTN will not be able to know that it is a conventional call and therefore the STN will take time in answering.

In a preferred embodiment, it will not be necessary to disconnect the voice mail service, but it will be sufficient for the voice mail to not switch on during the time expected for receiving FMS messages. There are also other voice mail systems that are completely compatible with the system, such as those which are managed in the terminal itself, compared to those offered by the operator.

Another option for discriminating conventional calls from FMS messages is to duplicate the FMS contacts in the phonebook and assign the network prefix (#31# or the equivalent) to these duplicates. This prefix hides the number from which the call is made (hidden identity), such that when the system receives this type of call, it would treat it like a conventional voice call, without any waiting or special ringing tones.

Once both users STN and RTN have configured their telephone equipment, with the system and the methods installed therein and share the coding tables MCT (including the BCT), they would be able to send and/or receive FMS messages.

In a preferred embodiment of the invention, the telephone terminals use a digital mobile telephony service, either GSM, 3G or later versions. However, sending FMS messages can occur between different telephony systems, such as the fixed telephony system and IP telephony system (Internet Protocol telephony), such that sending (receiving) has its origin (destination) in an IP system with the capacity to connect to the conventional or mobile telephone network, such as a VoIP (Voice over Internet Protocol) client or a web browser.

### Sending FMS messages

The process for sending messages is similar to that of sending an SMS or MMS with the restriction in the selection of the message which will herein be conditioned to a limited number of messages.

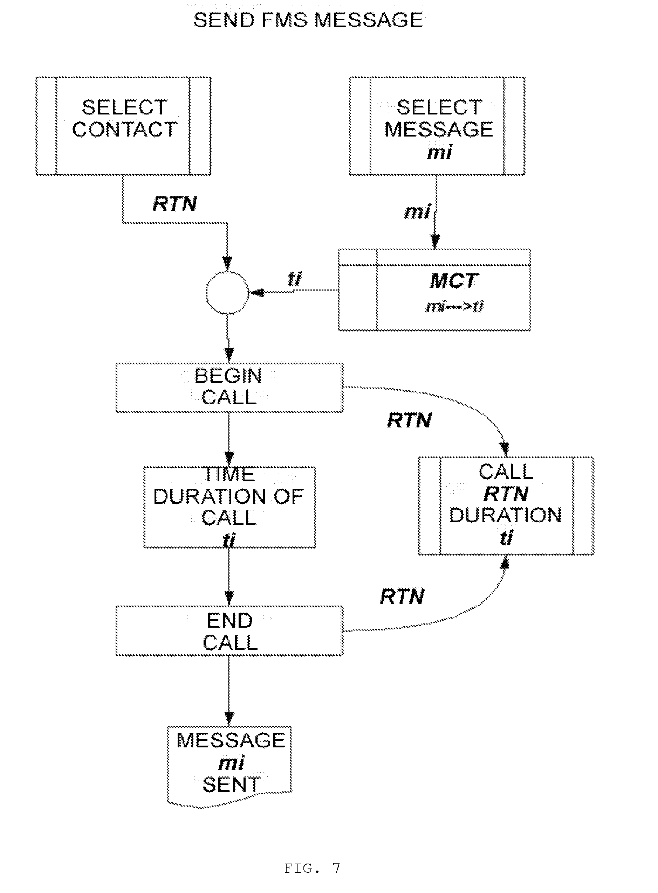

The option "send FMS" will be selected from the telephone, after which the steps to be completed, which are schematically depicted in Figure 7, will appear.

The user STN selects a contact from the FMS group to whom he wishes to send the message RTN.

He selects the message to be sent from among those available in his MCT by means of the process which best adapts to the features and specifications of his telephone terminal, such as the following for example:
selecting from a listing of the available messages for sending,
selecting from miniature views of the available messages for sending,
selecting from a free write field, which serves as a filter for the search for the available messages with the typed terms.

Once the message to be sent *mi* has been selected, the system searches for the corresponding duration time *ti* of the call, which will serve to transmit it. For this purpose, the system consults a data warehouse for the correspondence between said message *mi* and the equivalent time *ti* of the call.

The system will initiate a call to the telephone RTN of duration *ti.*

Once the time *ti* has lapsed, the system will make the STN automatically cut off the initiated call.

The system will present a message with the result of the sending, whether it was positive or negative.

By means of the described process, the user STN has sent to his contact RTN an FMS message without any cost whatsoever, neither for the call nor for sending an SMS-MMS type message.

### Receiving FMS messages

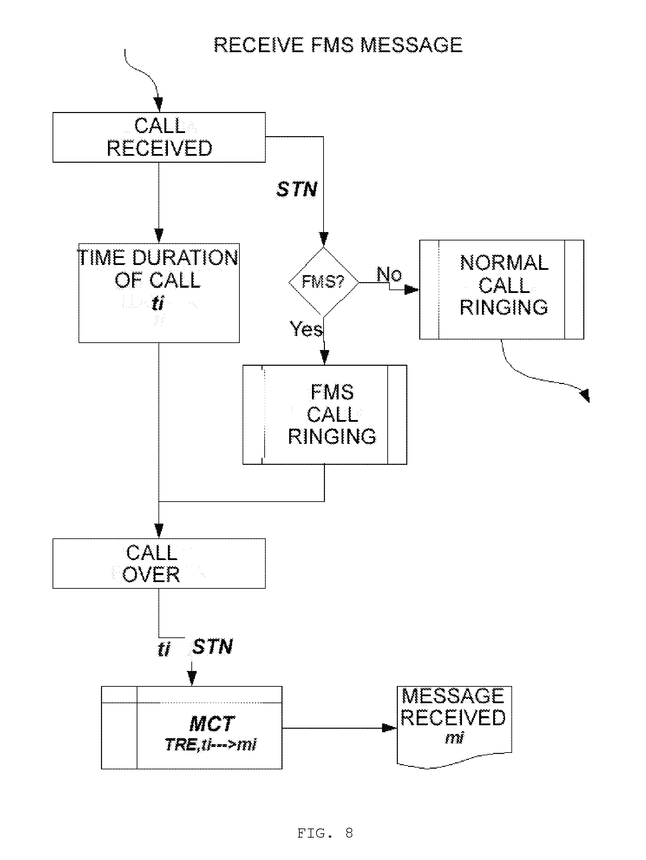

The process for receiving messages according to one embodiment of the invention is schematically depicted in Figure 8. The user RTN will receive a call in his telephone, and it will automatically start to be timed from the moment of initiating same.

The system will check if the calling telephone number STN is in the group of system users for sending FMS messages. If it is not classified as an FMS user, the system will treat the incoming call like a conventional voice call, assigning it the corresponding ringing tone and ending the initiated timer.

If the user STN is in the FMS phonebook, the system will have to discriminate if it is attempting to send an FMS message or if it is merely a conventional telephone voice call. For this purpose it assigns the special ringing tone described above, such that if it is a message, the user STN will cut of the call with absolute certainty before the ringing tone begins to sound in the final phase thereof. If, in contrast, the STN attempts to initiate a voice conversation, the ringing tone will remain in silence in the initial phase, and it will begin to sound when a time *t11* has passed for automatically cutting off the call, the initiated timer ending.

In the case of sending a message, the timer will end when the user STN cuts off the call, whereby the time *ti* of coding the sent message will be known.

With said time *ti* and the identifier of the user who has sent the message STN, the system will search for the corresponding message in the MCT, displaying the message to the receiver RTN.

In the event that the receiver wishes to answer the FMS message with another FMS message, the system will propose to him the messages which are defined in the figure as *mci* for sending.

By means of the described process, the user RTN has received from his contact STN a message at no cost whatsoever, and without altering the normal working of his telephone or of the telephony network used.

### Other components of the system

In order for the potential system users to be able to know the system, its methods as well as to share their messages files, the system of the invention can additionally comprise a centralized server where all the updated information related with the proposed FMS system is located.

### Preferred Embodiment

The design and working of a system and a method according to the invention, for sending messages at no cost between mobile telephone users will be described as a preferred embodiment.

Mobile telephony terminals today are powerful pieces of equipment capable of running software applications specifically developed for mobile services. These applications are run on the operating systems which control the main functions of the telephones and are quite varied: phonebooks, calendars, file management, multimedia, games...

The system will make a centralized server connected to the telecommunication network and to Internet available to potential users, where the software necessary for being installed in different mobile telephony equipment will be located.

Each user will select from among the available software versions that which is compatible and best adapts to the specifications of his telephone terminal, and will follow the instructions for downloading, installing and configuring it. It is important to point out that in order to use the system, any automatic call forwarding, including voice mail, must be disabled.

Once the software is installed in the telephone, a new group of users will be created (depending on the telephone, it can be automatically created) in which the contacts that are also FMS system users will gradually be entered. The users added to this group will have a special ringing tone assigned to them, such that it allows in incoming calls discriminating between an FMS message and a conventional call.

To send an FMS message, the user will open the FMS application, select a contact from this group, a message to be sent from among the available options and confirm the sending.

The software will automatically search in the Message Conversion Table MCT the equivalence between the message (*mi*) to be sent and the duration time (*ti*) of the call for transmitting the message.

Once the message has been sent, the user will receive a confirmation of its delivery or, where appropriate, of the failure to send.

To receive a message, the user must also have the software corresponding to his telephone installed, and in the event that the incoming call is included in the group of contacts, it will assign a special ringing tone, consisting of an initial period of silence, during which time the message is coded, followed by a normal ringing tone, in order to allow receiving normal calls.

Another way to discriminate between sending FMS messages and normal calls consists of assigning a "hidden call" network code in the conventional calls.

The user could customize the messages he sends by creating a variant of the coding table in the centralized server, installing the file generated in his terminal and making said file available to other users for downloading and installing it. These customized lists of messages allow the user to "translate" the meaning of the messages from the Basic Table into his own language, or to even create other entirely new ones. The user could also select from the centralized server the lists of messages of his contacts for receiving from/sending to them customized messages.

The users could also directly exchange their files of customized lists of messages by means of data exchange systems, such as memory cards, Bluetooth type wireless technologies or even by sending multimedia messages MMS.

A preferred scenario for sending messages according to the method and system of the invention is described below.

The method for sending messages uses a telephone communication service which allows the user to manage incoming calls, specifically allowing the deactivation of any automatic call forwarding service, including the voice mail service. The messages are sent between two or more communication terminals with the capacity to use the mentioned telephony service, the telephone terminals comprising means for processing, storing, exchanging, displaying and managing data of a different nature, including, among others, data relating to:
- connection times, call duration and management, including for missed calls,
- listings of users and groups of users,
- listings of messages to be sent/received, both in text format and in other multimedia formats,
- conversion tables between messages and call times for sending/receiving said messages.

The data warehouse or Basic Coding Table, which establishes a relation between times and messages and allows the conversion between them, is **characterized in that** the times are associated with the duration of an unanswered call and the maximum time before the telephone system considers the call to be over is divided into sub-periods.

There is a centralized server connected to said telecommunication service and/or to Internet, where the users can find the updated information relating to the system itself, its working methods and its users, which server will also have means for processing, storing, exchanging, displaying and managing one or more databases with said information, including, among others:
- a database with the different options for installation, configuration, use and limitations according to the different telephone terminal models and the different technologies used by the telephony network, and/or
- a database with the options characteristic of a community of users.

The data warehouse can comprise means for allowing the possibility to answer a prior message with a list of messages related to same, creating a structure similar to a conversation and for allowing multiple instances of messages associated with the duration of the call, creating customized lists of messages so that the users can select that which they feel is suitable for sending/receiving. The lists of messages are presented in multimedia formats, including, among others, text (in any language and/or set of characters), sound, images, animated images, video, as well as any combination thereof.

The telephone terminals will be provided with means that allow selecting the list of messages which the user is going to use for sending/receiving, either the Basic Table or a customized one, and selecting the message to be sent by means of different processes, including:
- by means of directly selecting from a drop-down list of messages,
- by means of selecting the messages from miniature views, and/or
- by means of free text write which is used as a criterion for searching for messages containing said text.

The telephone terminals can have means which allow creating a group of contacts linked to the use of the proposed system for sending messages and assigning to said group of contacts a special ringing tone with the following features:
- an initial period of silence, such that if a message is being received, the call ring does not sound,
- an audible end period, such that if a conventional telephone call is being received, the receiver can answer it.

The centralized server can comprise means which allow:
- the direct or indirect connection with the communication terminals which allows exchanging data between server and terminals, including wireless links, personal computers used as a gateway and/or any portable carrier for storing data, such as flash memory cards,
- the search for and selection of the files available for the different telephone terminal models, and/or
- the aided or automatic downloading and installation of the files necessary for carrying out the system and its methods for the different telephone terminal models.

The centralized server can comprise means which allow:
- the creation, by users, of their own customized lists of messages from the Basic Coding Table (*duration of* call - *message);*
- the generation of individual files from each of these customized lists of messages;
- the management of a database with the lists of messages of the users which allows them:
   ■ to handle multiple instances of lists of messages,
   ■ to make their lists of messages public such that other system users can know them, and
   ■ to share the published lists of messages with other users by means of downloading the corresponding files.

## Claims

1. A method for sending messages between telephone terminals, comprising the following steps:
coding a message (*mi*) in an emitting terminal as a specific duration time (*ti*) of an unanswered call,
making a call with that specific duration time (*ti*), and
decoding the message (*mi*) corresponding to the duration (*ti*) of the received call in a receiving terminal,
wherein
the message (*mi*) to be sent is one selected from a plurality of available messages (*m1, m2,* ... *mi...)*; and
the coding message (*mi*) - time (*ti*) of the call and decoding time (*ti*) of the call - message (*mi*) is performed by means of consulting a coding table (BCT, MCT) relating each message of the plurality of available messages *(m1, m2,* ... *mi...)* with a specific time *(t1, t2,* ... *ti...)* of the call.

2. The method for sending messages between telephone terminals according to claim 1, wherein the maximum time before a telephone communication service used by the telephone terminals considers the call to be over is divided into sub-periods (Δ), a specific time *(t1, t2, ... ti...)* of the call, which in turn is associated with one of the messages of the plurality of available messages *(m1, m2, ... mi...),* being comprised in each sub-period (Δ).

3. The method for sending messages between telephone terminals according to any one of the preceding claims, wherein the receiving terminal
starts to time from the reception of a telephone call;
consults if the emitting terminal belongs to a defined group of contacts;
if it belongs to the defined group of contacts, it stops timing when the emitting terminal cancels the call,
and
presents the message equivalent to the duration time of the received call; and if it does not belong to the group of contacts, it activates the ringing tone according to the standard criteria and stops the timer.

4. The method for sending messages between telephone terminals according to claim 3, wherein said defined group of contacts is assigned a special ringing tone comprising:
an initial period of silence during which no call ring sounds, and
an audible end period,
wherein the duration times corresponding to the plurality of available messages are contained in the duration of the initial period of silence.

5. The method for sending messages between telephone terminals according to any one of the preceding claims, which comprises confirming to the emitting terminal whether the sending of the message has been positive or negative.

6. The method for sending messages between telephone terminals according to any one of the preceding claims, wherein a single message (*mi*) corresponds to each specific duration time (*ti*) of a call and each message (*mi*) is associated with a single specific duration time (*ti*) of the call.

7. The method for sending messages between telephone terminals according to any one of claims 1-5, **characterized in that** it allows multiple instances of messages associated with a specific duration time (*ti*) of the call by means of creating customized lists of messages (MCT).

8. The method for sending messages between telephone terminals according to claim 7, **characterized in that** it allows creating a double list of messages in the coding table, wherein each specific duration time (*ti*) of a call is related with two messages *(mi; mci),* a first list comprising messages for initiating conversation (*mi*) and a second list comprising messages for replying (*mci*) to said messages for initiating conversation.

9. The method for sending messages between telephone terminals according to claim 7 or 8, **characterized in that** it allows answering a received message with a message selected from a list of messages related with said received message, creating a structure similar to a conversation.

10. The method for sending messages between telephone terminals according to any one of claims 7-9, **characterized in that** it allows customizing, expanding and/or updating the coding table adding ones own lists of messages and/or lists of messages associated with a determined contact.

11. The method for sending messages between telephone terminals according to any one of the preceding claims, **characterized in that** the messages are of a multimedia nature, comprising text and/or sound and/or images and/or video.

12. The method for sending messages between telephone terminals according to any one of the preceding claims, **characterized in that** the telephone terminals are IP- type terminals.

13. A computer program, **characterized in that** it comprises program code means for carrying out the method for sending messages between telephone terminals according to any one of claims 1-12, when said program works in a telephony terminal.

14. A system for sending messages between telephony terminals, comprising in at least one telephony terminal:
memory means suitable for storing at least one coding table relating each message of a plurality of messages with a specific duration of an unanswered call, and
processing means suitable for carrying out the steps of the method according to any one of claims 1-12.

15. The system for sending messages between telephony terminals according to claim 14, comprising a centralized server connected to a telecommunication service and/or to Internet.

16. The system for sending messages between telephony terminals according to claim 15, comprising means in the centralized server which allow:
the direct or indirect connection and the exchange of data between the centralized server and the at least one telephone terminal; and/or
the search for and selection of the files available for the at least one telephone terminal; and/or
the aided or automatic downloading and installation in the at least one telephone terminal of the files necessary for carrying out the method according to any one of claims 1-12.

17. The system for sending messages between telephony terminals according to any one of claims 15-16, **characterized in that** said system comprises means in the centralized server which allow:
the creation, by users, of customized lists of messages from a basic initial coding table relating the duration of an unanswered call with a message; and/or
the generation of individual files from each of these customized lists of messages; and/or
the management of a database with lists of messages which allows handling multiple instances of lists of messages, making the lists of messages public and sharing the published lists of messages with other users by means of downloading the corresponding files.
